# EUROPÄISCHE PATENTSCHRIFT

(11) **EP 2 669 636 B1**
(45) Veröffentlichungstag und Bekanntmachung des Hinweises auf die Patenterteilung: **30.09.2015**
(21) Anmeldenummer: 12170486.0
(22) Anmeldetag: 01.06.2012
(51) Int. Cl.: G01D 5/244

(54) **Messwertgeber zum Erhalt einer Positionsinformation und Verfahren zum Betrieb eines solchen Messwertgebers**
Data encoder for receiving position information and method for operating the same
Dispositif d'établissement de valeurs de mesure pour obtenir une information de position et procédé de fonctionnement de celui-ci

(43) Veröffentlichungstag der Anmeldung: 04.12.2013
(73) Patentinhaber: Siemens Aktiengesellschaft, 80333 München (DE)
(72) Erfinder: Zettner, Jürgen, 90587 Veitsbronn (DE); Finkler, Roland, 91058 Erlangen (DE)

(56) Entgegenhaltungen:
- EP-A1- 2 213 988
- DE-A1- 10 226 444
- US-A1- 2011 147 572
- Hopp, Seybold: "Untersuchungen zu einem hochauflösenden optischen Drehwinkelsensorin Low-Cost-Bauweise", Internet , 20. Oktober 2008 (2008-10-20), XP55040072, Gefunden im Internet: URL:http://www.imat.hsg-imit.de/fileadmin/ hsg-imat/pdfs/AiF219ZN_Drehgeber.pdf [gefunden am 2012-10-04]

## Beschreibung

Die Erfindung betrifft einen Messwertgeber zum Erhalt einer Positionsinformation und ein Verfahren zum Betrieb eines solchen Messwertgebers. Als Positionsinformation werden dabei absolute und/oder inkrementelle Positionsinformationen verstanden. Messwertgeber der hier besprochenen Art werden als Messwertgeber zum Erhalt einer Positionsinformation bezeichnet, um sie von anderen Messwertgebern zu unterscheiden, die als Messwerte zum Beispiel ein Maß für eine Temperatur, einen Druck, eine elektrische Spannung oder dergleichen ermitteln. Messwertgeber zum Erhalt einer Positionsinformation sind an sich bekannt. Exemplarisch kann auf sogenannte Absolut- und Inkrementalgeber verwiesen werden.

Bei Dreh- und Lineargebern mit diffraktiver Maßverkörperung und einer binären Absolutspur mit computergenerierten Hologrammen, wie dies aus der EP 1 677 081 B1 bekannt ist, sowie einer Inkrementalspur mit einem Streifenmuster (grating), wie dies aus der Veröffentlichung "Absolutkodierung für einen diffraktiven optischen Drehgeber" von David Hopp et al. in DGaO Proceedings 2011 oder dem unter dem Titel "Untersuchungen zu einem hochauflösenden optischen Drehwinkelsensor in Low-Cost-Bauweise" veröffentlichten und vom Institut für Mikroaufbautechnik der Hahn-Schickard-Gesellschaft (HSG-IMAT), Stuttgart und dem Institut für Technische Optik der Universität Stuttgart (ITO) herausgegebenen Abschlussbericht aus dem Jahre 2008 bekannt ist, ist eine exakte Montage und Justierung eines Trägers dieser Maßverkörperungen in Bezug auf eine Sende-/Empfangseinheit, mit der die Maßverkörperung abgetastet wird, erforderlich.

Bei einem solchen Träger handelt es sich bei sogenannten Drehgebern normalerweise um eine auch als Codescheibe bezeichnete rotierende Scheibe. Eine solche Codescheibe soll mittig und senkrecht zur Drehachse gelagert sein. Bei einer exakt mittigen und senkrechten Lagerung kann davon ausgegangen werden, dass sich die Codescheibe ohne Exzentrizität und ohne Taumeln dreht. In der Praxis ist aber stets mit einer gewissen Exzentrizität sowie einem gewissen Taumeln zu rechnen. Dadurch kommt es zu drehwinkelabhängigen Fehlwinkeln (Kippwinkeln) αx, αy und einem Radialversatz ε. Durch solche Fehler ist speziell die Abtastung der Inkrementalspurinformationen beeinflusst. Im Falle von bei der Abtastung der Inkrementalspur(en) resultierenden Sinus- und Kosinussignalen können sich dabei Offsets, Amplituden, Phasen und die Kurvenform (Harmonische) verändern. Bei einer idealen Situation mit αx = αy = ε = 0 kann von fehlerfreien Sinus- und Kosinussignalen ausgegangen werden, während außerhalb dieser Bedingung stets von fehlerbehafteten Sinus- und Kosinussignalen ausgegangen werden muss. Dies wirkt sich auf den aus den Inkrementalsignalen ermittelten Positionswert aus, so dass sich je nach Anwendungssituation als Probleme eine schlechte Gebergenauigkeit, eine schlechte Positioniergenauigkeit, ein höherer Effektivwert eines Motorstroms, eine höhere Erwärmung eines Motors, eine höhere Geräuschentwicklung des Motors und dergleichen sowie Kombinationen daraus ergeben. Die oben geschilderte Problematik gilt entsprechend auch für Lineargeber, mit der Ausnahme, dass sich dort anstelle eines Radialversatzes eine Abweichung von einer an sich vorgesehenen Bewegungsrichtung des Trägers ergeben kann. In der DE10226444 wird ein Messwertgeber mit einer Inkrementalspur und einer Spur aus diffraktiv wirkenden mikrostrukturierten Feldern zur Kodierung einer absoluten Position offenbart.

In der DE 101 63 504 A und der DE 10 2004 038 621 B sind Möglichkeiten zur Kompensation von Offset-, Amplituden- und Phasenfehlern in Spursignalen beschrieben. Des Weiteren ist in der DE 10 2004 038 621 B auch eine Möglichkeit zur Kompensation von Verzerrungen in den Spursignalen aufgrund von Harmonischen beschrieben.

Aus der US 2011/147572 A ist ein Ansatz zur Kompensation von Exzentrizitätsfehlern bekannt, bei dem ein Absolutsignal ausgewertet wird. Das Absolutsignal kodiert die jeweilige Dreh winkelposition und mit der Drehwinkelposition wird eine Korrekturformel aus einer begrenzten Anzahl von Korrekturformeln zur Korrektur eines Inkrementalsignals ausgewählt.

Eine Aufgabe der vorliegenden Erfindung besteht darin, eine Möglichkeit zur Korrektur oder Kompensation solcher Fehler und darauf basierend einen Messwertgeber und ein Verfahren zum Betrieb eines Messwertgebers anzugeben, der bzw. das eine möglichst weitgehende Korrektur oder Kompensation solcher Fehler erlaubt.

Diese Aufgabe wird erfindungsgemäß mit einem Messwertgeber zum Erhalt einer Positionsinformation mit den Merkmalen des Anspruchs 1 gelöst. Des Weiteren wird diese Aufgabe auch mit einem Verfahren zum Betrieb eines solchen Messwertgebers mit den Merkmalen des unabhängigen Verfahrensanspruchs gelöst.

Hinsichtlich des Messwertgebers ist dabei vorgesehen, dass dieser eine Sende- / Empfangseinheit umfasst, mit der eine Maßverkörperung abtastbar ist und dass die Maßverkörperung auf einem Träger, insbesondere einem drehbaren Träger (Drehgeber) oder einem translatorisch beweglichen Träger (Lineargeber), diffraktiv wirkende mikrostrukturierte Felder, zum Beispiel computergenerierte Hologramme (CGH), umfasst. Des Weiteren ist vorgesehen, dass die Maßverkörperung solche mikrostrukturierten Felder zur Kodierung einer absoluten Position und zumindest eine Inkrementalspur umfasst, sowie dass aus einem Absolutsignal, das bei einer Abtastung der mikrostrukturierten Felder erhältlich ist, zumindest eine Korrekturinformation zur Korrektur mindestens eines bei einer Abtastung der Inkrementalspur erhältlichen Inkrementalsignals ableitbar ist. Das Absolutsignal ist also mittelbar zur Korrektur eines Inkrementalsignals oder mehrerer Inkrementalsignale verwendbar, indem aus dem Absolutsignal zumindest eine Korrekturinformation ableitbar ist und diese zur unmittelbaren Korrektur des oder jedes Inkrementalsignals verwendbar ist. Zur besseren Lesbarkeit wird die weitere Beschreibung für den üblichen Fall zweier Inkrementalsignale (Sinussignal, Kosinussignal) fortgesetzt. Jede Bezugnahme auf eine Mehrzahl von Inkrementalsignalen impliziert aber die Eignung des hier vorgestellten Ansatzes auch für Situationen, bei denen genau ein Inkrementalsignal oder mehr als zwei Inkrementalsignale bearbeitet werden.

Hinsichtlich des Verfahrens zum Betrieb eines solchen Messwertgebers ist entsprechend vorgesehen, dass aus einem bei einer Abtastung der mikrostrukturierten Felder zur Kodierung einer absoluten Position resultierenden Absolutsignal zumindest eine Korrekturinformation zur Korrektur eines bei einer Abtastung der Inkrementalspur erhältlichen Inkrementalsignals abgeleitet wird. Das Absolutsignal wird dabei mittelbar zur Korrektur eines Inkrementalsignals verwendet, indem aus dem Absolutsignal zumindest eine Korrekturinformation abgeleitet wird und diese zur unmittelbaren Korrektur eines Inkrementalsignals verwendet wird.

Der Vorteil der Erfindung besteht darin, dass montage- oder justierungsabhängige Fehler der vom Messwertgeber als Positionsinformation gelieferten Inkrementalsignale korrigierbar oder zumindest zum Teil korrigierbar sind und bei einer Anwendung des korrespondierenden Verfahrens korrigiert oder zumindest zum Teil korrigiert werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Messwertgebers ist das zur Kodierung einer absoluten Position erhältliche Absolutsignal ein von einem Empfangsteil der Sende- / Empfangseinheit aufnehmbares oder aufgenommenes Bitmuster. Bei dem Empfangsteil handelt es sich zum Beispiel um einen optischen Detektor in Form einer CCD-Zeile oder einer CCD-Matrix. Als Korrekturinformation ist dann eine Verschiebung des mit dem Empfangsteil aufnehmbaren oder aufgenommenen Bitmusters in x-Richtung und/oder y-Richtung ermittelbar. Als Verschiebung wird dabei jede Abweichung zwischen einer erwarteten Position des Bitmusters und dessen tatsächlicher Position bei der Aufnahme durch das Empfangsteil aufgefasst. Aus der ermittelten Verschiebung in x-Richtung (dx) und/oder y-Richtung (dy) lässt sich oder lassen sich einer der beiden Kippwinkel αx, αy oder beide Kippwinkel αx, αy bestimmen, denn diese lassen sich als Funktion der ermittelten Verschiebung(en) ausdrücken: αx = f( dx); αy = g(dy).

Bei einem rotierenden Träger eines Drehgebers ist oder sind der bzw. die Kippwinkel abhängig vom Drehwinkel des Trägers, sofern nicht noch eine Verformung des Trägers insgesamt vorliegt. Bei einem translatorisch bewegten Träger eines Lineargebers ist oder sind der bzw. die Kippwinkel mitunter konstant oder abhängig von der jeweiligen translatorischen Position, sofern nicht noch eine Verformung des Trägers vorliegt. Auf Basis der ermittelten Verschiebung(en) lassen sich damit Fehler der Inkrementalsignale aufgrund einer nicht exakt senkrechten Lagerung des Trägers mit der Maßverkörperung und daraus resultierender Kippwinkel αx, αy korrigieren.

Eine gleichzeitige Erfassung sowohl der Verschiebung in x-Richtung wie auch der Verschiebung in y-Richtung legt die Verwendung eines Flächendetektors, also zum Beispiel einer CCD-Matrix, als Empfangsteil nahe. Grundsätzlich ist jedoch auch die Verwendung eines Lineardetektors, also zum Beispiel einer CCD-Zeile, und die Erfassung einer Verschiebung entlang nur einer Raumrichtung möglich. Wenn zum Beispiel die Verschiebung dx in x-Richtung ermittelt wurde, kann daraus bei einem rotatorisch bewegten Träger eines Drehgebers einer der Kippwinkel direkt bestimmt werden: αx = f( dx ). Aus dem zeitlichen Verlauf des Wertes von αx (also nicht aus dem bloßen Momentanwert) ergibt sich dann der Verlauf von αy, da beide Größen sinusförmig vom Drehwinkel des Trägers abhängen, wobei sich die eine aus der anderen lediglich durch eine Phasenverschiebung von 90° ergibt.

Bei einer zusätzlichen oder alternativen Ausführungsform des Messwertgebers ist als Korrekturinformation eine von dem Bitmuster umfasste radiale Positionsinformation ermittelbar bzw. wird eine von dem Bitmuster umfasste radiale Positionsinformation ermittelt. Auf Basis der ermittelten radialen Positionsinformation lassen sich damit Fehler der Inkrementalsignale aufgrund einer nicht exakt zentrierten Lagerung des Trägers (Radialversatz ε ≠ 0) mit der Maßverkörperung und eine daraus resultierende Exzentrizität korrigieren.

Dies gilt zunächst für Messwertgeber in einer Ausführungsform als Drehgeber. Dies gilt aber analog auch für Messwertgeber in einer Ausführungsform als Lineargeber. Dann umfassen die Bitmuster nicht die oben genannte radiale Positionsinformation, sondern eine Positionsinformation hinsichtlich der zur Bewegungsrichtung des bei einem Lineargeber translatorisch bewegten Trägers senkrechten Raumrichtung. Zur Vereinfachung der weiteren Darstellung wird im Folgenden davon ausgegangen, dass sich der Begriff "radiale Positionsinformation" nicht notwendig auf Drehgeber beschränkt und dass der Begriff bei Lineargebern als Positionsinformation hinsichtlich der weiteren Raumrichtung zu verstehen ist. Gleiches gilt für den Begriff "Radialversatz", der bei Lineargebern als Versatz aufzufassen ist, und weitere, sprachlich eher auf die Anwendungssituation eines Drehgebers bezogene Ausdrücke, wie zum Beispiel Exzentrizität oder dergleichen, die jeweils im Zusammenhang mit einem Lineargeber im Sinne einer dort sinnvollen Bedeutung verstanden werden sollen.

Dabei ist allgemein zu bemerken, dass eine eventuelle Exzentrizität der Anbringung des Trägers mit der Maßverkörperung nicht zu einer Verschiebung des mit dem Empfangsteil aufgenommenen Bitmusters führt. Unabhängig von einer bestehenden oder nicht gegebenen Exzentrizität wird die Lage des Bitmusters bei ansonsten exakt senkrechter Ausrichtung des Trägers nur durch den Verlauf des Abtaststrahls und den Verlauf des aufgrund der Beugung an der Mikrostruktur transmittierten oder reflektierten Strahls bestimmt. Nur eine Abweichung von einer exakt senkrechten Ausrichtung des Trägers verändert den Auftreffwinkel des Abtaststrahls auf der jeweiligen Mikrostruktur und damit auch eine Richtung des aufgrund der Beugung an der Mikrostruktur resultierenden transmittierten oder reflektierten Strahls. Dies macht sich als Verschiebung des Bitmusters in Bezug auf den sensitiven Bereich des jeweiligen Empfangsteils bemerkbar. Eine eventuelle Exzentrizität beeinflusst diese Strahlverläufe nicht und bewirkt höchstens die Erfassung eines anderen mikrostrukturierten Feldes mit dem Abtaststrahl.

Nachdem die Strahlverläufe von einer Exzentrizität der Scheibe nicht beeinflusst sind, ergibt sich für ein eventuell erfasstes anderes Feld der Maßverkörperung keine Verschiebung des resultierenden Bitmusters am Empfangsteil, sondern nur eine Änderung des Bitmusters selbst. Auf diese Weise ist eine eventuelle Exzentrizität des Trägers von einer eventuell nicht exakt senkrechten Ausrichtung des Trägers unterscheidbar. Umgekehrt sind eine festgestellte Verschiebung ausschließlich auf eine nicht ausreichend exakte senkrechte Ausrichtung des Trägers und eine Änderung einer radialen Positionsinformation ausschließlich auf eine Exzentrizität des Trägers zurückführbar. Dies ist eine Basis für eine Korrektur der Inkrementalsignale. Alternativ zur Korrektur von Inkrementalsignalen kann stattdessen aber beispielsweise auch aus zwei Inkrementalsignalen wie in DE2729697A1 zunächst ein interpolierter Positionswert berechnet werden und anschließend dieser dann statt der zu Grunde liegenden Inkrementalsignale korrigiert werden.

Bei einer besonderen Ausführungsform des Messwertgebers weist dieser eine als Entzerrer oder Entzerrlogik fungierende Signalkorrektureinheit auf, der als Eingangssignal oder als Eingangssignale mindestens eine Korrekturinformation der oben genannten Art zuführbar ist, wobei anhand der mindestens einen Korrekturinformation eine Entzerrkennlinie zur Korrektur der Inkrementalsignale anwendbar ist. Die Signalkorrektureinheit ist demnach eine Möglichkeit für die tatsächliche Korrektur der Inkrementalsignale, indem durch die Signalkorrektureinheit eine Entzerrkennlinie angewendet wird und nach Anwendung der Entzerrkennlinie ein optimiertes inkrementelles Signal resultiert.

Eine Möglichkeit zur Anwendung einer solchen Entzerrkennlinie besteht darin, dass die Signalkorrektureinheit anhand der mindestens einen Korrekturinformation eine Entzerrkennlinie generiert und die so generierte Entzerrkennlinie zur Korrektur der Inkrementalsignale angewendet wird. Eine alternative Möglichkeit zur Anwendung einer solchen Entzerrkennlinie besteht darin, dass durch die Signalkorrektureinheit anhand der mindestens einen Korrekturinformation aus einer Mehrzahl von digital kodierten Entzerrkennlinien eine Entzerrkennlinie ausgewählt wird und dass die so ausgewählte Entzerrkennlinie zur Korrektur der Inkrementalsignale angewendet wird.

Soweit der Messwertgeber eine Signalkorrektureinheit umfasst, ist ein durch eine jeweilige Funktionalität der Signalkorrektureinheit bestimmter Aspekt der Erfindung in Soft- und/oder Firmware implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Messwertgeber mit einer Verarbeitungseinheit und einem Speicher, in den als Mittel zur Durchführung des Verfahrens und seiner Ausgestaltungen ein solches Computerprogramm geladen oder ladbar ist. Alternativ zur Verwendung eines durch eine Verarbeitungseinheit ausführbaren Computerprogramms kommt auch eine Realisierung der Funktionalität der Signalkorrektureinheit als Firmware oder in Form einer Funktionsstruktur zum Beispiel eines sogenannten ASCIs, PLDs, FPGAs oder dergleichen in Betracht. Beide Konzepte sind dem Fachmann an sich und als Alternative zu einer Softwareimplementation wohlbekannt. Für die weitere Beschreibung soll der Begriff Computerprogramm auch solche Implementierungen der Funktionalität der Signalkorrektureinheit umfassen.

Der Vorteil der Erfindung und ihrer Ausgestaltungen besteht damit insbesondere darin, dass sich durch Ausnutzen beispielsweise der Informationen zur Lage und zur eventuellen Verschiebung des Absolutbitmusters auf dem Linear- oder Flächendetektor und/oder der radialen Positionsinformation die beim Abtasten der Inkrementalspur resultierenden Inkrementalsignale optimieren lassen. Die Optimierung besteht dabei darin, dass Verzerrungen oder Verfälschungen aufgrund einer ungenauen Anbringung des die Maßverkörperung umfassenden Trägers oder aufgrund einer im Betrieb des Drehgebers veränderlichen Position oder Ausrichtung des Trägers kompensiert oder zumindest im Wesentlichen kompensiert werden. Diese Optimierung / Korrektur kann dadurch erfolgen, dass die Verläufe der tatsächlich aufgenommenen Inkrementalsignale durch eine schnelle Elektronik, nämlich zum Beispiel in Form der oben erwähnten Signalkorrektureinheit, in Abhängigkeit von den Korrekturinformationen optimiert oder korrigiert wird. Dadurch wird beispielsweise eine höhere sinnvolle Interpolationstiefe hinsichtlich der Auswertung eines oder mehrerer Inkrementalsignale möglich. Insgesamt wird eine höhere Justage- und Fehlertoleranz erreicht.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine fehlerhafte Anbringung und Justierung eines Trägers einer Maßverkörperung, der im Betrieb durch einen Messwertgeber zum Erhalt einer Positionsinformation abgetastet wird,
- FIG 2: den Träger in einer Draufsicht mit weiteren Details zu der darauf befindlichen Maßverkörperung,
- FIG 3: eine Darstellung zur Verdeutlichung einer Verschiebung eines Auftreffpunkts eines bei der Abtastung der Maßverkörperung in FIG 2 als Absolutsignal oder Absolutinformation auswertbaren Bitmusters im Vergleich zu einem erwarteten Auftreffpunkt auf einem optischen Detektor des Messwertgebers,
- FIG 4: eine Signalkorrektureinheit, der als Eingangssignal oder als Eingangssignale mindestens eine Korrekturinformation zum Beispiel hinsichtlich der in FIG 3 gezeigten Verschiebung zuführbar ist bzw. sind und die anhand der mindestens einen Korrekturinformation zumindest eine Entzerrkennlinie zur Korrektur eines bei der Abtastung der Maßverkörperung in FIG 2 erhältlichen Inkrementalsignals anwendet sowie
- FIG 5: eine Darstellung zur Verdeutlichung einer radialen Positionsinformation, die aus einem bei der Abtastung der Maßverkörperung in FIG 2 als Absolutsignal oder Absolutinformation auswertbaren Bitmuster erhältlich ist.

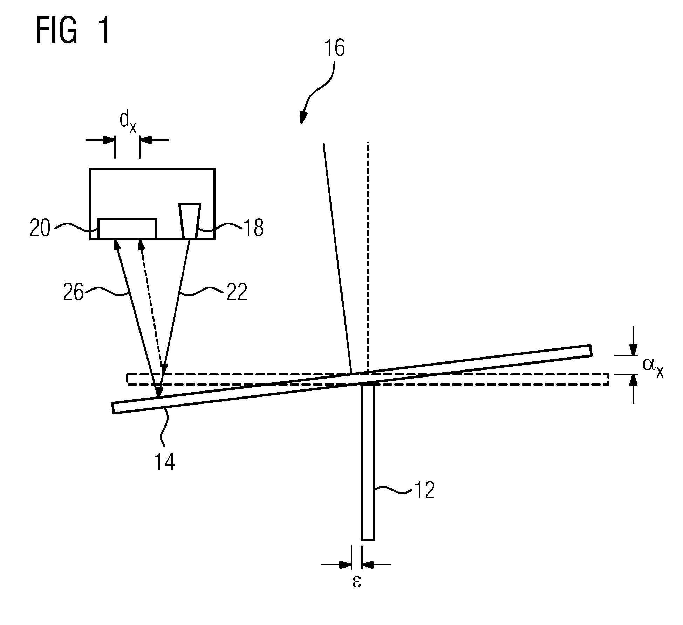

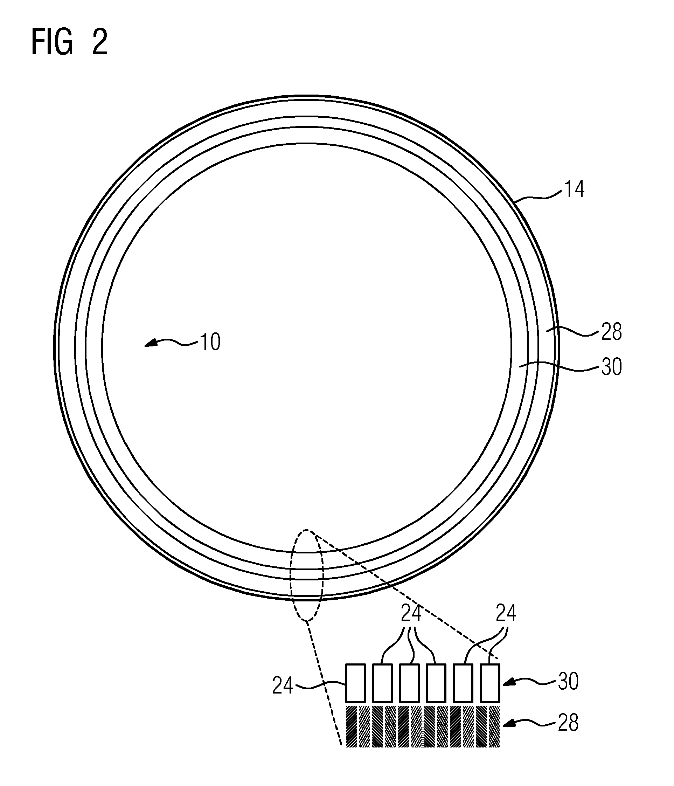

FIG 1 zeigt schematisch stark vereinfacht als Träger einer Maßverkörperung 10 (FIG 2) eine an einer Achse 12, zum Beispiel einer Motorachse, drehbare Scheibe (Codescheibe) 14. Die dargestellte Justierung der Scheibe 14 ist fehlerhaft und zum Vergleich ist mit gestrichelten Linien eine korrekte Justierung der Scheibe 14 gezeigt. Die fehlerhafte Justierung der Scheibe 14 besteht einerseits in einem hier und im Folgenden mit dem Formelzeichen ε ausgedrückten Radialversatz, der zu einer Exzentrizität der Drehbewegung der Scheibe 14 führt, und andererseits in einer mit dem Formelzeichen αx ausgedrückten Abweichung von einer exakt senkrechten Ausrichtung der Scheibe 14 zu ihrer Drehachse (Verkippung). Nicht dargestellt ist in der schematisch vereinfachten Seitenansicht in FIG 1 eine eventuelle weitere Verkippung entlang der anderen zur Drehachse senkrechten Raumachse (αy).

Beim Abtasten der Maßverkörperung 10 mit einer Sende- / Empfangseinheit (Abtasteinheit) eines Messwertgebers 16 zum Erhalt einer Positionsinformation, bei dem es sich entsprechend der drehbaren Scheibe 14 um einen Drehgeber handelt, ergibt sich aufgrund der Verkippung ein Fehler. Auch dies ist in der Darstellung in FIG 1 nur schematisch vereinfacht in Bezug auf den Messwertgeber 16 gezeigt. Dieser umfasst in der Sende- / Empfangseinheit eine Strahlquelle 18, zum Beispiel einer Laserdiode, und als Empfangsteil einen optisch sensitiven Detektor 20. Die Strahlquelle 18 sendet im Betrieb des Messwertgebers 16 einen Abtaststrahl 22 in Form von kohärentem Licht aus, der an von der Maßverkörperung 10 umfassten mikrostrukturierten Feldern 24 (FIG 2) entsprechend der jeweiligen Mikrostruktur eine Beugung erfährt und anschließend in Form eines oder mehrerer reflektierter oder transmittierter Strahlen (hier nur am Beispiel einer Reflektion 26 gezeigt) vom Detektor 20 aufgefangen wird.

Der Verlauf des Abtaststrahls 22 und der Verlauf der zugehörigen Reflektion 26 sind für die exakt senkrecht ausgerichtete Scheibe 14 mit gestrichelten Linien gezeigt. Man erkennt, dass im Vergleich dazu aufgrund der verkippten Scheibe 14 die Reflektion 26 an einer anderen Stelle des Detektors 20 empfangen wird. Diese Verschiebung wird symbolisch mit dem Formelzeichen dx bezeichnet. Aus einer von Null verschiedenen Verschiebung dx und einer ggf. neben einer solchen Verschiebung in x-Richtung ebenfalls auftretenden Verschiebung in y-Richtung (dy) lässt sich durch Anwendung an sich bekannter trigonometrischer Funktionen die Verkippung αx (und ggf. eine weitere Verkippung αy) ermitteln, denn der zwischen dem Abtaststrahl 22 und der Reflektion 26 eingeschlossene Winkel ist im Vergleich zur exakt senkrecht ausgerichteten Scheibe um genau 2αx größer.

FIG 2 zeigt in einer Draufsicht die Scheibe 14 und die von dieser in Form von hier einer Inkrementalspur 28 und einer Absolutspur 30 umfassten Maßverkörperung 10. Zumindest die Absolutspur 30 umfasst eine Vielzahl mikrostrukturierter Felder 24, zum Beispiel in Form von computergenerierten Hologrammen (CGH). Dies ist in FIG 2 im Rahmen einer Ausschnittsvergrößerung eines Sektors der Scheibe 14 gezeigt. Die Ausmaße der Spuren 28 und 30 im Vergleich zum Durchmesser der Scheibe 14 sind zu Illustrationszwecken stark vergrößert dargestellt. Außerdem kann die Scheibe 14 als Maßverkörperung mehr als eine Absolutspur 30 und mehr als eine Inkrementalspur 28 umfassen.

Bei der in FIG 2 dargestellten Scheibe 14 handelt es sich entsprechend der für die Scheibe 14 vorgesehenen Drehbarkeit um eine Scheibe 14 mit einer runden Grundform und entsprechend um eine Scheibe 14 für einen als Drehgeber fungierenden Messwertgeber 16. Der hier vorgestellte Ansatz ist allerdings ausdrücklich nicht auf Drehgeber beschränkt, auch wenn im Interesse einer knappen Darstellung die Beschreibung anhand eines Drehgebers und mit den dort passenden Bezeichnungen (Radialversatz, Exzentrizität, etc.) erfolgt. Der Ansatz eignet sich genauso auch für Messwertgeber 16 in einer Ausführungsform als Lineargeber. Beim Studium der hier vorgelegten Beschreibung sind dafür lediglich die oben erwähnten Bezeichnungen und Begriffe durch solche Bezeichnungen und Begriffe zu ersetzen, die für die Anwendungssituation eines Lineargebers passen, also zum Beispiel Radialversatz und Versatz.

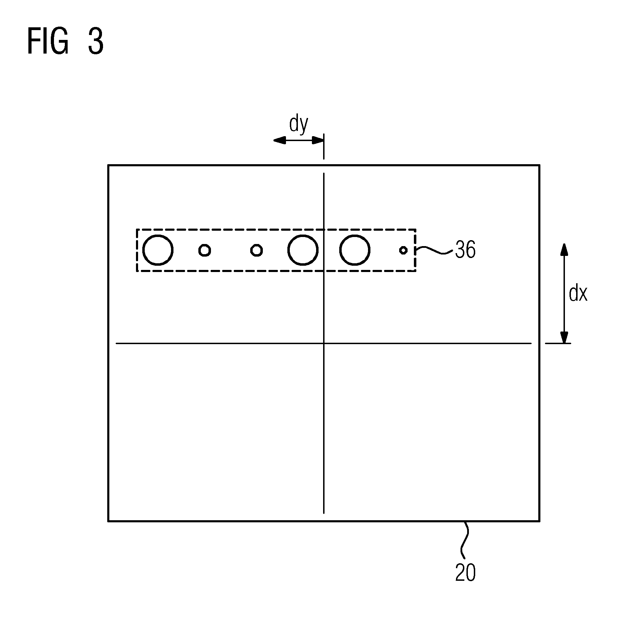

Bei einer Abtastung der Absolutspur 30 und einer dortigen Erfassung jeweils genau eines mikrostrukturierten Feldes 24 resultiert ein Absolutbitmuster, welches - wie in FIG 1 gezeigt - zum Beispiel aufgrund einer Reflektion 26 mit dem Detektor 20 des Messwertgebers 16 erfasst wird. Dazu ist in FIG 3 schematisch vereinfacht eine optisch sensitive Fläche eines als Flächendetektor ausgeführten Detektors 20 gezeigt.

Das aufgrund der Abtastung der Absolutspur 30 als Absolutbitmuster resultierende Bitmuster 36, bei dem größere Kreise Bereiche höherer optischer Intensität und kleinere Kreise entsprechend Bereiche geringerer optischer Intensität darstellen sollen, kodiert im dargestellten Fall den Binärwert "100110". Im Vergleich zu einem nur zu Illustrationszwecken eingezeichneten Fadenkreuz auf der Fläche des Detektors 20 erkennt man, dass das Bitmuster 36 auf der Fläche des Detektors 20 zumindest nach oben verschoben ist, wenn man normalerweise die Reflektion 26 und entsprechend das resultierende Bitmuster 36 im Zentrum der Fläche des Detektors 20 erwartet. Dies ist die bereits anhand von FIG 1 beschriebene und mit dx bezeichnete Verschiebung in x-Richtung. Ebenfalls liegt hier eine Verschiebung in Richtung der anderen Raumachse, also in y-Richtung, vor. Diese Verschiebung ist entsprechend als dy eingezeichnet. Die Verschiebung(en) kann bzw. können jeweils von einem Mittelpunkt eines das Bitmuster 36 einschließenden Rahmens (in FIG 3 als punktierte Linie gezeigt) bis zum Schnittpunkt des Fadenkreuzes gemessen werden. Die Ermittlung eines Wertes für eine Verschiebung des Bitmusters 36 entlang einer der beiden Raumrichtungen (dx oder dy) oder entlang beider Raumrichtungen (dx und dy) ist mit den Mitteln der digitalen Bildverarbeitung ohne Weiteres möglich und entsprechende Algorithmen sind dem Fachmann wohlbekannt.

Mit einem Flächendetektor lassen sich gleichzeitig Verschiebungen in zwei unterschiedlichen Raumrichtungen ermitteln. Mit einem Lineardetektor lässt sich eine Verschiebung in derjenigen Raumrichtung ermitteln, die mit der Längserstreckung des Lineardetektors zusammenfällt.

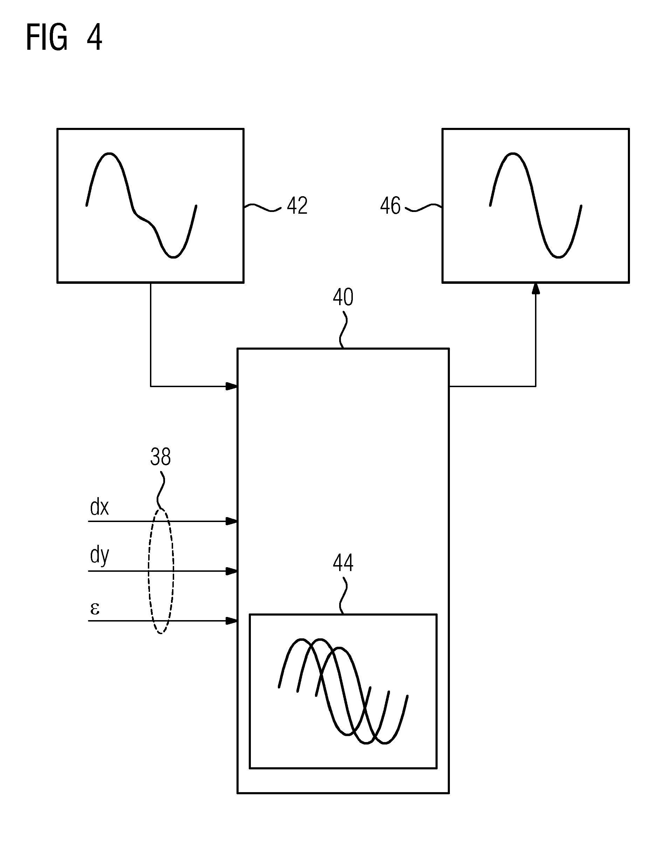

FIG 4 zeigt schematisch vereinfacht, dass die oder jede Verschiebung als Korrekturinformation 38 einer Signalkorrektureinheit 40 des Messwertgebers 16 zugeführt werden. Die Signalkorrektureinheit 40 ermittelt anhand einer jeweiligen Verschiebung (dx oder dy; optional dx und dy) die zugehörige(n) Verkippung(en) αx oder αy oder optional αx und αy. Eine weitere Korrekturinformation 38, die von der Signalkorrektureinheit 40 zusätzlich oder alternativ auswertbar ist, ist ein eventueller Radialversatz ε.

Die Signalkorrektureinheit 40 verwendet die oder jede ihr zugeführte Korrekturinformation 38 zur Korrektur eines bei einer Abtastung der Inkrementalspur 28 erhältlichen Inkrementalsignals 42. Dazu wird der Signalkorrektureinheit 40 das jeweilige Inkrementalsignal 42 ebenfalls an einem Eingang zugeführt. Man erkennt bei der Darstellung in FIG 4, dass das Inkrementalsignal 42 kein ideales Sinussignal ist und dass das Inkrementalsignal 42 also verzerrt ist. Diese Verzerrung ist das Resultat einer Fehljustierung der Scheibe 14, also entweder einer Verkippung oder eines Radialversatzes oder einer Kombination aus diesen beiden Fehlermöglichkeiten.

Zur Kompensation oder Korrektur solcher Verzerrungen verwendet die Signalkorrektureinheit 40 eine oder mehrere Entzerrkennlinien 44. Eine oder mehrere Entzerrkennlinien 44 wird bzw. werden dabei entweder von der Signalkorrektureinheit 40 in Abhängigkeit von den Korrekturinformationen 38 generiert oder die Signalkorrektureinheit 40 verfügt bereits über eine Mehrzahl gespeicherter Entzerrkennlinien 44 (oder hat darauf in geeigneter Weise Zugriff) und aus diesen wird eine Entzerrkennlinie 44 oder werden mehrere Entzerrkennlinien 44 entsprechend der Korrekturinformationen 38 ausgewählt.

Wenn die Signalkorrektureinheit 40 eine oder mehrere Entzerrkennlinien 44 jeweils in Abhängigkeit von momentanen Korrekturinformationen 38 generiert, umfasst die Signalkorrektureinheit 40 dafür zum Beispiel eine Implementation der in der DE 101 63 504 A oder der DE 10 2004 038 621 B beschriebenen Ansätze zur Kompensation von Offset-, Amplituden- und Phasenfehlern in Spursignalen oder zur Kompensation von Verzerrungen in den Spursignalen aufgrund von Harmonischen. Wenn die Signalkorrektureinheit 40 bereits über verwendbare Entzerrkennlinien 44 verfügt, können diese unabhängig von der Signalkorrektureinheit 40 zum Beispiel auf der Grundlage der in der DE 101 63 504 A oder der DE 10 2004 038 621 B beschriebenen Ansätze generiert werden und in geeigneter Form, zum Beispiel digital kodiert, der Signalkorrektureinheit 40 verfügbar gemacht werden. Beide Varianten sind möglich und sinnvoll. Darüber hinaus ist auch denkbar, beide Varianten gleichzeitig zu implementieren, so dass die Signalkorrektureinheit 40 zum Beispiel normalerweise eine der Entzerrkennlinien 44 verwendet, über die sie bereits verfügt und dass die Signalkorrektureinheit 40 nur dann selbst eine oder mehrere weitere Entzerrkennlinien 44 generiert, wenn von den verfügbaren Entzerrkennlinien 44 keine ausreichend genau zu den jeweiligen Korrekturinformationen passt.

Jedenfalls verwendet die Signalkorrektureinheit 40 eine oder mehrere verfügbare oder generierte Entzerrkennlinien 44 zur Korrektur des Inkrementalsignals 42 und das Ergebnis ist ein optimiertes inkrementelles Signal 46, das am Ausgang der Signalkorrektureinheit 40 ausgegeben wird und dort abgreifbar ist.

Wenn die Signalkorrektureinheit 40 über eine Mehrzahl von Entzerrkennlinien 44 verfügt, kann deren Auswahl anhand der jeweiligen Korrekturinformationen 38 nach dem Prinzip einer sogenannten Look-Up-Tabelle (LUT) erfolgen. Dafür kann vorgesehen sein, dass jeder der Signalkorrektureinheit 40 verfügbar gemachten Entzerrkennlinie 44 Parameter zugeordnet sind, welche die Situation kodieren, für die die jeweilige Entzerrkennlinie 44 aufgenommen oder generiert wurde. Bei diesen Parametern kann es sich um solche Parameter handeln, wie sie der Signalkorrektureinheit 40 als Korrekturinformationen 38 zuführbar sind, also Korrekturinformationen 38 in Bezug auf drehwinkelabhängige Fehlwinkel (Kippwinkeln) αx, αy oder resultierende Verschiebungen dx, dy und/oder einen Radialversatz ε. Wenn die der Signalkorrektureinheit 40 verfügbar gemachten Entzerrkennlinien 44 durch Parameter derselben Art beschrieben sind, wie sie der Signalkorrektureinheit 40 als Korrekturinformationen 38 zugeführt werden, kann oder können unmittelbar durch einen Vergleich der Parameter und der momentanen Korrekturinformationen 38 die zu den Korrekturinformationen 38 am besten passende Entzerrkennlinie 44 oder die zu den Korrekturinformationen 38 am besten passenden Entzerrkennlinien 44 ausgewählt werden. Wenn eine Divergenz hinsichtlich der die Entzerrkennlinien 44 beschreibenden Parameter und der Korrekturinformation 38 vorliegt, übernimmt die Signalkorrektureinheit 40 eine Vorverarbeitung der Korrekturinformation 38, so dass ein solcher Vergleich möglich wird. Der Vollständigkeit halber sei darauf hingewiesen, dass alternativ zur Auswahl nur je einer Entzerrkennlinie 44 pro Inkrementalsignal auch jeweils mehrere, beispielsweise zwei "benachbarte" Entzerrkennlinien 44 ausgewählt werden können, um dann zwischen deren Abbildungsergebnissen zu interpolieren.

Die Signalkorrektureinheit 40 kann als anwenderspezifischer integrierter Schaltkreis (ASIC) oder dergleichen realisiert sein. Die Funktionalität der Signalkorrektureinheit 40 kann auch in Software implementiert sein. Dann gehört zur Signalkorrektureinheit 40 eine nicht dargestellte Verarbeitungseinheit in Form von oder nach Art eines Mikroprozessors und ein ebenfalls nicht dargestellter Speicher, in den ein Computerprogramm geladen ist, welches durch die Verarbeitungseinheit ausführbar ist und die Funktionalität der Signalkorrektureinheit 40 bestimmt. Im dem Speicher sind dann, sofern die Signalkorrektureinheit 40 bereits verfügbare Entzerrkennlinien 44 verwendet, Daten hinterlegt, die diese beschreiben. Eine Implementation in Software oder eine Implementation in Firmware oder eine Implementation in Form einer Funktionsstruktur zum Beispiel eines ASCIs oder dergleichen sind grundsätzlich gleichwertig und kommen als alternative Ausführungsformen in Betracht.

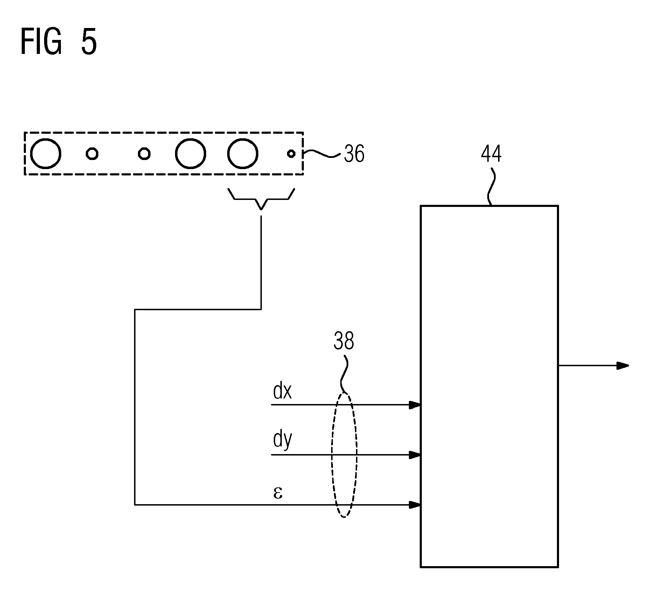

Abschließend soll noch der Aspekt, dass als Korrekturinformation 38 eine von dem Bitmuster 36 umfasste radiale Positionsinformation ermittelbar ist, graphisch dargestellt werden. Dazu wird auf FIG 5 verwiesen. Die Darstellung in FIG 5 wiederholt einen Teil der Darstellung in FIG 4, nämlich die Signalkorrektureinheit 40 mit deren Eingängen für die Korrekturinformation 38. Als Korrekturinformation 38 wertet die Signalkorrektureinheit 40 eine Verschiebung des Bitmusters 36 in x-Richtung und/oder y-Richtung (dx oder dy oder dx und dy) und/oder eine von dem Bitmuster 36 umfasste radiale Positionsinformation (ε) aus. Es ist auch denkbar und je nach Einsatzfall genauso sinnvoll, dass die Signalkorrektureinheit 40 als Korrekturinformation 38 nur eine von dem Bitmuster 36 umfasste radiale Positionsinformation (ε) auswertet. In der Zeichnung ist hinsichtlich der radialen Positionsinformation der entsprechende Eingang der Signalkorrektureinheit 40 mit dem für den Radialversatz verwendeten Formelzeichen ε bezeichnet. Dies findet aber seine Berechtigung darin, dass sich eine für die Signalkorrektureinheit 40 relevante radiale Positionsinformation nur bei einem Radialversatz mit ε ≠ 0 ergibt.

Hinsichtlich der von dem Bitmuster 36 umfassten radialen Positionsinformation wird mit Bezug auf die vereinfachte Darstellung in FIG 3 und FIG 5 davon ausgegangen, dass die letzten beiden Bits die radiale Positionsinformation kodieren. Dargestellt ist das Bitmuster 36 in diesem Abschnitt mit einem Bereich höherer Lichtintensität und einem Bereich geringerer Lichtintensität, so dass sich bei der für das dargestellte Bitmuster zugrunde gelegten Erfassung des jeweiligen mikrostrukturierten Feldes 24 als radiale Positionsinformation die Bitfolge "10" ergibt. Die Art oder der Umfang der Erfassung des jeweiligen mikrostrukturierten Feldes 24 bezeichnet die radiale Position des Abtaststrahls 22 in Bezug auf das jeweilige Feld 24. Eine vollständige oder ausreichend vollständige Erfassung eines mikrostrukturierten Feldes 24 kann demnach als eine erste radiale Position aufgefasst werden. Bei einer anderen radialen Position des Abtaststrahls 22 in Bezug auf das jeweilige Feld 24 (zweite radiale Position) kann sich zum Beispiel die Bitfolge "01" ergeben. Unterschiedliche radiale Positionen des Abtaststrahls 22 in Bezug auf die mikrostrukturierten Felder 24 der Absolutspur 30 führen demnach zu unterschiedlichen Bitfolgen mit radialen Positionsinformationen und aus jeder derartigen Bitfolge kann eine entsprechende Korrekturinformation 38 abgeleitet werden.

Ein der Signalkorrektureinheit 40 als Korrekturinformation 38 für einen Radialversatz (ε) übermittelter Wert ist dann zum Beispiel Null, wenn sich als radiale Positionsinformation jeweils die Bitfolge "01" ergibt und zum Beispiel Eins, wenn sich als radiale Positionsinformation jeweils die Bitfolge "10" ergibt. Auf dieser Basis kann unter der Annahme, dass der Abtaststrahl 22 normalerweise sowohl die Inkrementalspur 28 wie auch die Absolutspur 30 und bei einem Radialversatz die Absolutspur 30 nur noch teilweise erfasst der Signalkorrektureinheit 40 als Korrekturinformation 38 für einen Radialversatz (ε) ein Wert Null oder Eins bzw. ein entsprechendes Digitalsignal zugeführt werden. Die durch ein mikrostrukturiertes Feld 24 je nach dessen Erfassung durch den Abtaststrahl 22 kodierte radiale Positionsinformation kann auch detaillierter sein und mehr als zwei verschiedene, als Korrekturinformation 38 an die Signalkorrektureinheit 40 lieferbare Werte ermöglichen.

Unabhängig von einer jeweiligen Detailtiefe der Korrekturinformation 38 handelt es sich um eine digitale oder diskrete Kodierung und Auswertung des Radialversatzes. Die Darstellung des Bitmusters 36 in FIG 3 und FIG 5 ist allerdings eine idealisierte Darstellung und es kann je nach radialer Position des Abtaststrahls 22 an einer Stelle des Bitmusters 36, die in den Figuren mit einem Kreis mit einem großen Radius dargestellt ist, auch zu einer mittleren Lichtintensität kommen, die aber nach dem im Messwertgeber 16 implementierten Auswertungsalgorithmus zu einer logischen "1" im resultierenden Bitmuster 36 führt. Dennoch handelt es sich ursprünglich um eine auch als Analogsignal auffassbare Information. Dies wird besonders gut verständlich, wenn man sich vorstellt, dass das entsprechende Bit gleichsam wie eine gedimmte Glühbirne stärker oder schwächer erscheint, je nachdem, welchen Zwischenwert die radiale Position zwischen der eingangs als erste bzw. zweite radiale Position bezeichneten Position einnimmt. Auf dieser Basis kann der Signalkorrektureinheit 40 als Korrekturinformation 38 für einen Radialversatz (ε) ein positiver bzw. negativer rationaler Zahlenwert oder ein entsprechendes Analogsignal zugeführt werden.

Eine solche Korrekturinformation 38 kann genauso wie die oben beschriebenen Korrekturinformationen 38 zur Verschiebung des Bitmusters 36 oder zusammen mit solchen Korrekturinformationen 38 durch die Signalkorrektureinheit 40 ausgewertet werden. Ebenfalls kann eine solche Korrekturinformation 38 oder eine solche Korrekturinformation 38 zusammen mit weiteren Korrekturinformationen 38 zur Auswahl einer oder mehrerer Entzerrkennlinien 44 nach dem Prinzip einer Look-Up-Tabelle verwendet werden. Zusätzlich oder alternativ kann eine solche Korrekturinformation 38 auch zur Generierung einer oder mehrerer Entzerrkennlinien 44 durch die Signalkorrektureinheit 40 verwendet werden.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Messwertgeber (16) zum Erhalt einer Positionsinformation und ein Verfahren zum Betrieb eines solchen Messwertgebers (16), wobei aus einem bei einer Abtastung einer Maßverkörperung (10) resultierenden Absolutsignal zumindest eine Korrekturinformation (38) zur Korrektur mindestens eines bei einer Abtastung einer Inkrementalspur (28) erhältlichen Inkrementalsignals (42) ableitbar ist. Die aus dem Absolutsignal ableitbare Korrekturinformation 38 ist dabei zum Beispiel eine Information hinsichtlich einer Verschiebung eines Auftreffpunkts eines als Absolutsignal oder Absolutinformation auswertbaren Bitmusters 36 im Vergleich zu einem erwarteten Auftreffpunkt und/oder eine von dem Absolutsignal oder der Absolutinformation oder dem Bitmuster 36 umfassten radialen Positionsinformation.

## Patentansprüche

1. Messwertgeber (16) zum Erhalt einer Positionsinformation, mit einer Sende- / Empfangseinheit, mit der eine Maßverkörperung (10) abtastbar ist und wobei die Maßverkörperung (10) diffraktiv wirkende mikrostrukturierte Felder (24) zur Kodierung einer absoluten Position und zumindest eine Inkrementalspur (28) umfasst, **dadurch gekennzeichnet, dass** mittels des Messwertgebers (16) aus einem Absolutsignal, das bei einer Abtastung der diffraktiv wirkenden mikrostrukturierten Felder (24) zur Kodierung einer absoluten Position erhältlich ist, zumindest eine Korrekturinformation (38) zur Korrektur eines bei einer Abtastung der Inkrementalspur (28) erhältlichen Inkrementalsignals (42) ableitbar ist und dass diese Korrekturinformation (38) mittels des Messwertgebers (16) aus einer Verschiebung eines als Absolutsignal auswertbaren Bitmusters (36) in x-Richtung und/oder y-Richtung im Vergleich zu einem erwarteten Auftreffpunkt ermittelbar ist.

2. Messwertgeber (16) nach Anspruch 1, wobei als Korrekturinformation (38) eine von dem Bitmuster (36) umfasste radiale Positionsinformation ermittelbar ist.

3. Messwertgeber (16) nach einem der Ansprüche 1 oder 2, mit einer Signalkorrektureinheit (40), der als Eingangssignal oder als Eingangssignale mindestens eine Korrekturinformation (38) zuführbar ist und wobei anhand der mindestens einen Korrekturinformation (38) zumindest eine Entzerrkennlinie (44) zur Korrektur des Inkrementalsignals (42) anwendbar ist.

4. Messwertgeber (16) nach Anspruch 3, wobei durch die Signalkorrektureinheit (40) anhand der mindestens einen Korrekturinformation zumindest eine Entzerrkennlinie (44) generierbar ist oder wobei durch die Signalkorrektureinheit (40) anhand der mindestens einen Korrekturinformation (38) aus einer Mehrzahl von digital kodierten Entzerrkennlinien (44) zumindest eine Entzerrkennlinie (44) auswählbar ist.

5. Verfahren zum Betrieb eines Messwertgebers (16) nach einem der vorangehenden Ansprüche,
wobei aus einem bei einer Abtastung der Felder (24) zur Kodierung einer absoluten Position resultierenden Absolutsignal zumindest eine Korrekturinformation (38) zur Korrektur eines bei einer Abtastung der Inkrementalspur (28) erhältlichen Inkrementalsignals (42) abgeleitet wird und
wobei als Korrekturinformation (38) eine Verschiebung eines als Absolutsignal auswertbaren Bitmusters (36) in x-Richtung und/oder y-Richtung im Vergleich zu einem erwarteten Auftreffpunkt ermittelt wird.

6. Verfahren zum Betrieb eines Messwertgebers (16) nach einem der Ansprüche 2 bis 4, wobei als Korrekturinformation (38) eine von dem Bitmuster (36) umfasste radiale Positionsinformation ermittelt wird.

7. Verfahren zum Betrieb eines Messwertgebers (16) nach einem der Ansprüche 3 oder 4, wobei der Signalkorrektureinheit (40) als Eingangssignal oder als Eingangssignale mindestens eine Korrekturinformation (38) zugeführt wird und wobei anhand der mindestens einen Korrekturinformation (38) zumindest eine Entzerrkennlinie (44) zur Korrektur des Inkrementalsignals (42) angewendet wird.

8. Verfahren zum Betrieb eines Messwertgebers (16) nach Anspruch 4, wobei durch die Signalkorrektureinheit (40) anhand der mindestens einen Korrekturinformation (38) zumindest eine Entzerrkennlinie (44) generiert wird oder wobei durch die Signalkorrektureinheit (40) anhand der mindestens einen Korrekturinformation (38) aus einer Mehrzahl von digital kodierten Entzerrkennlinien (44) zumindest eine Entzerrkennlinie (44) ausgewählt wird.

9. Computerprogramm oder Computerprogrammprodukt mit Programmcodemitteln bzw. elektronisch auslesbaren Steuersignalen, um alle Schritte von jedem beliebigen der Ansprüche 5 bis 8 durchzuführen, wenn das Computerprogramm oder Computerprogrammprodukt durch einen Messwertgeber (16) nach einem der Ansprüche 1 bis 5 ausgeführt wird.

10. Messwertgeber (16) zum Erhalt einer Positionsinformation nach einem der Ansprüche 1 bis 4, mit einem Computerprogrammprodukt oder mit einer Verarbeitungseinheit und einem Speicher, in den ein Computerprogramm nach Anspruch 9 geladen ist, das im Betrieb des Messwertgebers (16) ausgeführt wird.

## Claims

1. Measuring transducer (16) for receiving an item of position information, having a transceiver unit, with which a dimensional scale (10) can be scanned and wherein the dimensional scale (10) includes microstructured fields (24) acting in a diffractive manner for encoding an absolute position and at least one incremental track (28),
**characterised in that**
by means of the measuring transducer (16), at least one item of correction information (38) for correcting an incremental signal (42) which can be obtained during a scanning of the incremental track (28) can be derived from an absolute signal, which can be obtained during a scanning of the microstructured fields (24) acting in a diffractive manner for encoding an absolute position, and that said item of correction information (38) can be determined by means of the measuring transducer (16) from a displacement of a bit pattern (36) which can be evaluated as an absolute signal in the x-direction and/or y-direction compared with an expected point of incidence.

2. Measuring transducer (16) according to claim 1, wherein an item of radial position information included in the bit pattern (36) can be determined as an item of correction information (38).

3. Measuring transducer (16) according to one of claims 1 or 2, with a signal correction unit (40), to which at least one item of correction information (38) can be fed as an input signal or as input signals and wherein on the basis of the at least one item of correction information (38) at least one equalising characteristic curve (44) can be used for the correction of the incremental signal (42).

4. Measuring transducer (16) according to claim 3, wherein at least one equalising characteristic curve (44) can be generated by the signal correction unit (40) on the basis of the at least one item of correction information or wherein at least one equalising characteristic curve (44) can be selected from a plurality of digitally encoded equalising characteristic curves (44) by the signal correction unit (40) on the basis of the at least one item of correction information (38).

5. Method for the operation of a measuring transducer (16) according to one of the preceding claims,
wherein at least one item of correction information (38) for correcting an incremental signal (42) which can be obtained during a scanning of the incremental track (28) is derived from an absolute signal resulting during a scanning of the fields (24) for encoding an absolute position and
wherein a displacement of a bit pattern (36) which can be evaluated as an absolute signal in the x-direction and/or y-direction is determined as an item of correction information (38) compared with an expected point of incidence.

6. Method for the operation of a measuring transducer (16) according to one of claims 2 to 4, wherein an item of radial position information included in the bit pattern (36) is determined as an item of correction information (38).

7. Method for the operation of a measuring transducer (16) according to one of claims 3 or 4, with at least one item of correction information (38) being fed as an input signal or as input signals to the signal correction unit (14) and wherein on the basis of the at least one item of correction information (38) at least one equalising characteristic curve (44) can be used for the correction of the incremental signal (42).

8. Method for the operation of a measuring transducer (16) according to claim 4, wherein at least one equalising characteristic curve (44) is generated by the signal correction unit (40) on the basis of the at least one item of correction information or wherein at least one equalising characteristic curve (44) is selected from a plurality of digitally encoded equalising characteristic curves (44) by the signal correction unit (40) on the basis of the at least one item of correction information (38).

9. Computer program or computer program product with program code means or electronically readable control signals in order to perform all steps of any one of claims 5 to 8, if the computer program or computer program product is executed by a measuring transducer (16) according to one of claims 1 to 5.

10. Measuring transducer (16) for receiving an item of position information according to one of claims 1 to 4, with a computer program product or with a processing unit and a memory, in which a computer program according to claim 9 is loaded, which is executed during the operation of the measuring transducer (16).

## Revendications

1. Dispositif ( 16 ) d'établissement de valeurs de mesure pour obtenir une information de position, comprenant une unité d'émission/réception, par laquelle une mesure ( 10 ) matérialisée peut être détectée, et dans lequel la mesure ( 10 ) matérialisée comprend des champs ( 24 ) microstructurés à effet de diffraction pour le codage d'une position absolue et au moins une trace ( 28 ) incrémentale,
**caractérisé en ce qu'**il peut être déduit, au moyen du dispositif ( 16 ) d'établissement de valeurs de mesure, à partir d'un signal absolu, qui peut être obtenu lors d'un balayage des champs ( 24 ) microstructurés à effet de diffraction pour le codage d'une position absolue, au moins une information ( 38 ) de correction pour la correction d'un signal ( 42 ) incrémental pouvant être obtenu lors d'une détection de la trace ( 28 ) incrémentale et
**en ce que** cette information ( 38 ) de correction peut être déterminée au moyen du dispositif ( 16 ) d'établissement de valeurs de mesure à partir d'un déplacement d'un agencement ( 36 ) de bits dans la direction x et/ou dans la direction y par rapport à un point d'incidence escompté.

2. Dispositif ( 16 ) d'établissement de valeurs de mesure suivant la revendication 1, dans lequel il peut être déterminé, comme information ( 38 ) de correction, une information de position radiale comprise par l'arrangement ( 36 ) de bits.

3. Dispositif ( 16 ) d'établissement de valeurs de mesure suivant la revendication 1 ou 2, comprenant une unité ( 40 ) de correction de signal, à laquelle peut être envoyée, comme signal d'entrée ou comme signaux d'entrée, au moins une information ( 38 ) de correction, et dans lequel, à l'aide de la au moins une information ( 38 ) de correction, au moins une courbe ( 44 ) caractéristique de correction peut être appliquée pour la correction du signal ( 42 ) incrémentale.

4. Dispositif ( 16 ) d'établissement de valeurs de mesure suivant la revendication 3, dans lequel il peut être produit, par l'unité ( 40 ) de correction du signal au moyen de la au moins une information de correction, au moins une courbe ( 44 ) caractéristique de correction ou dans lequel il peut être sélectionné, par l'unité ( 40 ) de correction du signal, à l'aide de la au moins une information ( 38 ) de correction, au moins une courbe ( 44 ) caractéristique de correction à partir d'une multiplicité de courbes ( 44 ) caractéristiques de correction codées numériquement.

5. Procédé pour faire fonctionner un dispositif ( 16 ) d'établissement de valeurs de mesure suivant l'une des revendications précédentes,
dans lequel on déduit, à partir d'un signal absolu provenant d'un balayage des champs ( 24 ) pour le codage d'une position absolue, au moins une information ( 38 ) de correction pour la correction d'un signal ( 42 ) incrémental pouvant être obtenu lors d'une détection de la trace ( 28 ) incrémentale et
dans lequel on détermine, comme information ( 38 ) de correction, un déplacement d'un arrangement ( 36 ) de bits pouvant être exploité comme signal absolu dans la direction x et/ou dans la direction y par rapport à un point d'incidence escompté.

6. Procédé pour faire fonctionner un dispositif ( 16 ) d'établissement de valeurs suivant l'une des revendications 2 à 4, dans lequel on détermine, comme information ( 38 ) de correction, une information de position radiale comprise par l'arrangement ( 36 ) de bits.

7. Procédé pour faire fonctionner un dispositif ( 16 ) d'établissement de valeurs suivant l'une des revendications 3 ou 4, dans lequel on envoie à l'unité ( 40 ) de correction du signal, comme signal d'entrée ou comme signaux d'entrée, au moins une information ( 38 ) de correction et dans lequel, à l'aide de la au moins une information ( 38 ) de correction, on applique au moins une courbe ( 44 ) caractéristique de correction pour la correction du signal ( 42 ) incrémental.

8. Procédé pour faire fonctionner un dispositif ( 16 ) d'établissement de valeurs suivant la revendication 4, dans lequel on produit, par l'unité ( 40 ) de correction du signal, à l'aide de la au moins une information ( 38 ) de correction, au moins une courbe ( 44 ) caractéristique de correction ou dans lequel on sélectionne, par l'unité ( 40 ) de correction du signal à l'aide de la au moins une information ( 38 ) de correction, au moins une courbe ( 44 ) caractéristique de correction parmi une pluralité de courbes ( 44 ) caractéristiques de correction codées numériquement.

9. Programme d'ordinateur ou produit de programme d'ordinateur ayant des moyens de code de programme ou des signaux de commande pouvant être déchiffrés électroniquement pour effectuer tous les stades de chacune quelconque des revendications 5 à 8, lorsque le programme d'ordinateur ou le produit de programme d'ordinateur est exécuté par un dispositif ( 16 ) d'établissement de valeurs de mesure suivant l'une des revendications 1 à 5.

10. Dispositif ( 16 ) d'établissement de valeurs pour obtenir une information de position suivant l'une des revendications 1 à 4, comprenant un produit de programme d'ordinateur ou une unité de traitement à une mémoire, dans laquelle un programme d'ordinateur suivant la revendication 9 est chargé, lequel est exécuté lors du fonctionnement du dispositif ( 16 ) d'établissement de valeurs de mesure.
